# EUROPÄISCHE PATENTSCHRIFT

(11) **EP 4 679 318 B1**
(45) Veröffentlichungstag und Bekanntmachung des Hinweises auf die Patenterteilung: **09.09.2026**
(21) Anmeldenummer: 24187000.5
(22) Anmeldetag: 08.07.2024
(51) Int. Cl.: G06K 7/14

(54) **LESEN OPTISCHER CODES**
READING OPTICAL CODES
LECTURE DE CODE OPTIQUE

(43) Veröffentlichungstag der Anmeldung: 14.01.2026
(73) Patentinhaber: SICK AG, 79183 Waldkirch (DE)
(72) Erfinder: Schüler, Pascal, 79331 Teningen (DE); Roser, Christofer, 78098 Triberg (DE); Falk, Thorsten, 79292 Pfaffenweiler (DE); Burghardt, Sascha, 79183 Waldkirch (DE); Müller, Dr. Romain, 79252 Stegen (DE)

(56) Entgegenhaltungen:
- EP-A1- 3 812 953
- EP-A1- 4 231 195
- EP-B1- 3 428 834
- DE-A1- 10 137 093
- DE-A1- 102018 109 392

## Beschreibung

Die Erfindung betrifft ein Verfahren zum Lesen optischer Codes nach dem Oberbegriff von Anspruch 1 sowie einen entsprechenden optoelektronischen Codeleser.

Codeleser sind von Supermarktkassen, zur automatischen Paketidentifikation, Sortierung von Postsendungen, von der Gepäckabfertigung in Flughäfen und aus anderen Logistikanwendungen bekannt. In einem Codescanner wird ein Lesestrahl mittels eines Drehspiegels oder eines Polygonspiegelrads quer über den Code geführt. Ein kamerabasierter Codeleser nimmt mittels eines Bildsensors Bilder der Objekte mit den darauf befindlichen Codes auf, und eine Bildauswertungssoftware extrahiert aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

In einer wichtigen Anwendungsgruppe werden die codetragenden Objekte an dem Codeleser vorbeigefördert. Ein Codescanner erfasst dabei die jeweils nacheinander in seinen Lesebereich geführten Codes. Alternativ liest in einem kamerabasierten Codeleser eine Zeilenkamera die Objektbilder mit den Codeinformationen sukzessive und zeilenweise mit der Relativbewegung ein. Mit einem zweidimensionalen Bildsensor werden regelmäßig Bilddaten aufgenommen, die sich je nach Aufnahmefrequenz und Fördergeschwindigkeit mehr oder weniger überlappen. Damit die Objekte in beliebiger Orientierung auf dem Förderer angeordnet werden können, sind oft mehrere Codeleser an einem Lesetunnel vorgesehen, um Objekte von mehreren oder allen Seiten aufzunehmen. Als Vorbereitung für das Lesen von Codes wird in einem aufgenommenen Bild eines codetragenden Objekts nach Codebereichen gesucht, also denjenigen Bereichen im Bild, die potentiell einen Code enthalten können. Dieser Schritt wird als Segmentierung oder Vorsegmentierung bezeichnet. In den meisten heutigen Codeleseanwendungen erfolgt die Segmentierung durch traditionelle Bildverarbeitungsalgorithmen und von Hand erstellte Klassifikatoren. Damit werden oft selbst sehr kleine Strukturen noch gut erkannt und somit auch Codebereiche mit kleinen Codes gefunden, beispielsweise 2D-Codes mit kleiner Modul- und Symbolgröße oder Barcodes mit geringer Codehöhe beziehungsweise Balkenlänge. Der herkömmliche Ansatz bleibt in seiner Bewertung sehr lokal. In schwierigen Lesesituationen etwa mit vielen Hintergrundstrukturen werden dadurch aber viele falsch-positive Codebereiche aufgefunden, die unter den typischen Echtzeitbedingungen der Anwendung nicht alle verarbeitet werden können und dadurch die Leserate herabsetzen. Ein anderer Ansatz für die Segmentierung basiert auf künstlichen neuronalen Netzen, insbesondere tiefen Faltungsnetzen (Deep Neural Network, Convolutional Neural Network CNN). Letztlich wendet ein solches neuronales Netz eine Vielzahl von mit Beispieldaten trainierten Filterkernen auf das Bild an.

Herkömmlich werden Segmentierung und Codelesen für eine Anwendung geräteseitig festgesetzt oder von Hand an eine Anwendungssituation angepasst, beispielsweise indem Verarbeitungsschritte oder Parameter in einem grafischen Benutzerinterface eingestellt werden. Eine Optimierung ist so nur im Mittel möglich, und auch in einer dynamischen Anwendung bleibt die Einstellung von Objekt zu Objekt oder Bild zu Bild fixiert. Das reduziert die Leserate, sei es direkt durch übersehene oder wegen unpassender Decodereinstellung nicht lesbare Codes oder indirekt, weil die verfügbare Decoderzeit nicht ausreicht, um alle Codebereiche und Bilder auszuwerten.

Als Beispiel sei der Parameter Suchkontrast angeführt, der festlegt, wie hoch der Kontrast in einem Bildbereich sein muss, damit dieser als Codebereich angesehen wird. Wird ein hoher Suchkontrast gefordert, so können kontrastschwache Codebereiche übersehen werden, während ein geringer Suchkontrast eine Anzahl von Codebereichen erkennt, die nur Hintergrundtextur und gar keinen optischen Code enthalten (false positive). Besonders deutlich zeigt sich dies bei einem Codeleser in stationärer Anwendung an einem Förderband mit großer Objekthöhenvarianz. Hier muss mit einer erhöhten Kontrastsensitivtät gearbeitet werden, also einem relativ kleinen Suchkontrast, um auf flachen Objekten aufgebrachte Codes noch als solche zu erkennen, die aufgrund ihres recht großen Abstands zum Codeleser schwachkontrastig werden. Zugleich weisen jedoch Codes auf größeren Objekten höhere Kontraste auf, so dass beispielsweise schon eine Kartontextur oder ein darauf befindliches Muster fälschlich als Code angesehen wird.

Aus der EP 3 812 953 A1 ist bekannt, dass ein Codeleser mittels eines Abstandssensors den Abstand zu einem Code bestimmt und anhand des gemessenen Abstands einen Parameter setzt oder einen Zusatzalgorithmus des Decodierverfahrens einbezieht. Das erfordert aber zusätzlichen apparativen Aufwand für den Abstandssensor, und zudem sind auch nicht alle für ein Segmentieren und Decodieren wichtigen Parameter aus dem Abstand ableitbar.

Es ist weiterhin bekannt, eine Historie von Decodierungen statistisch hinsichtlich gewisser Kennwerte zu analysieren, um dann Parameter für das künftige Codelesen anzupassen. Das funktioniert aber nur mit einer entsprechenden Historie und somit für schleichende, stetige Veränderungen. Abrupten Veränderungen oder einer Dynamik auf kurzen Zeitskalen, wie eine große Objekthöhenvarianz, lässt sich so nicht erfolgreich begegnen.

In der Arbeit Zhao, Qijie, et al, "Deep Dual Pyramid Network for Barcode Segmentation using Barcode-30k Database", arXiv preprint arXiv:1807.11886 (2018) wird ein großer Datensatz synthetisiert und damit eine Codesegmentierung durch CNNs durchgeführt.

Xiao, Yunzhe, and Zhong Ming, "1D Barcode Detection via Integrated Deep-Learning and Geometric Approach", Applied Sciences 9.16 (2019): 3268 reklamieren eine um mindestens 5 % gegenüber bisherigen Ansätzen verbesserte Performance beim Lokalisieren von Barcodes, ohne dass Parameter von Hand eingestellt werden müssten.

Hansen, Daniel Kold, et al, "Real-Time Barcode Detection and Classification using Deep Learning", IJCCI. 2017 erkennen Codebereiche einschließlich einer Verdrehung in Echtzeit mit einem Intel i5-6600 3.30 GHz und einer Nvidia GeForce GTX 1080.

Zharkov, Andrey; Zagaynov, Ivan, Universal Barcode Detector via Semantic Segmentation, arXiv preprint arXiv:1906.06281, 2019 erkennen Barcodes und identifizieren den Codetyp in einer CPU-Umgebung.

Die DE 101 37 093 A1 offenbart ein Verfahren zum Erkennen eines Codes und einen Codeleser, bei dem der Schritt, den Code innerhalb einer Bildumgebung zu lokalisieren, mittels eines neuronalen Netzes durchgeführt wird. Die DE 10 2018 109 392 A1 schlägt zum Erfassen optischer Codes die Verwendung von Faltungsnetzen vor. Aus der US 10 650 211 B2 ist ein weiterer Codeleser bekannt, der Faltungsnetze für das Auffinden der Codes in einem aufgenommenen Bild verwendet.

Die EP 3 428 834 B1 nutzt einen klassischen Decoder, der mit Verfahren ohne maschinelles Lernen arbeitet, um einen für maschinelles Lernen ausgebildeten Klassifikator oder spezieller ein neuronales Netz zu trainieren. Mit der Vorverarbeitung oder dem Auffinden von Codebereichen befasst sich dieses Dokument jedoch nicht näher.

In der EP 3 916 633 A1 wird eine Kamera und ein Verfahren zum Verarbeiten von Bilddaten beschrieben, bei dem eine Segmentierung mittels neuronalen Netzes in einem Streaming-Verfahren erfolgt, d.h. Bilddaten schon verarbeitet werden, noch während weitere Bilddaten eingelesen werden. Zumindest die ersten Schichten des neuronalen Netzes können auf einem FPGA implementiert sein. Das verringert erheblich die Rechenzeiten und Anforderungen an die Hardware, aber die Segmentierung oder das Codelesen selbst werden dadurch nicht verbessert.

Die EP 4 231 195 A1 zeigt eine kombinierte Segmentierung mit klassischer Bildverarbeitung und maschinellem Lernen. Anspruch 1 ist gegen dieses Dokument abgegrenzt.

Vor diesem Hintergrund ist Aufgabe der Erfindung, das Codelesen gerade in dynamischen Szenerien weiter zu verbessern.

Diese Aufgabe wird durch ein Verfahren zum Lesen optischer Codes nach Anspruch 1 sowie einen entsprechenden optoelektronischen Codeleser nach Anspruch 12 gelöst. Das Verfahren ist ein computerimplementiertes Verfahren, das beispielsweise in einer Recheneinheit eines Codelesers und/oder einer angeschlossenen Recheneinheit abläuft. Es wird ein Bild aufgenommen, in dem sich ein Objekt mit mindestens einem darauf angebrachten optischen Code befindet. Die Bildaufnahme kann insbesondere auf eine beliebige der eingangs beschriebenen Weisen erfolgen, beispielsweise während einer Förderbewegung oder indem ein Objekt einer Kamera in deren Sichtfeld präsentiert wird. Als Vorbereitungsschritt für das eigentliche Codelesen werden Codebereiche in dem Bild aufgefunden, also Bildausschnitte (ROI, region of interest) mit einem optischen Code, was auch als Segmentierung bezeichnet wird. Anschließend werden die aufgefundenen Codebereiche einem Decoder zugeführt, der den Codeinhalt des Codes in dem jeweiligen Codebereich ausliest beziehungsweise den Code decodiert und somit die darin codierte Botschaft in Klartext umwandelt. Es sei angemerkt, dass erst im Nachhinein festgestellt werden kann, ob mit dem Bild tatsächlich ein Objekt mit einem optischen Code aufgenommen wurde beziehungsweise in einem jeweiligen Codebereich ein optischer Code gelesen werden kann.

Im Zuge des Auffindens von Codebereichen wird ein erstes Segmentierungsverfahren durchgeführt, das maschinelles Lernen einsetzt. Die dabei ermittelten ersten Kandidaten für Codebereiche können je nach noch zu beschreibender Ausführungsform bereits als Codebereiche herangezogen werden, das eigentliche Auffinden von Codebereichen vorbereiten, eine Teilmenge der im Decoder weiterverarbeiteten Codebereiche sein oder ein Kriterium dafür sein, was als Codebereich anerkannt wird. Maschinelles Lernen umfasst hier im weiteren Sinne Verfahren, die auf Lernen oder Training aus Daten basieren, und im engeren Sinne Verfahren der künstlichen Intelligenz insbesondere unter Verwendung eines neuronalen Netzes. Als Gegenbegriff wird im Folgenden klassische Bildverarbeitung verwendet. Wichtige praktische Unterschiede sind, dass die klassische Bildverarbeitung schon mit ihrer Programmierung für ihre Aufgabe vorbereitet ist und nicht erst der Erfahrung beziehungsweise des Trainings bedarf, und dass ihre Leistungsfähigkeit von Anfang an bis über die gesamte Laufzeit mehr oder weniger konstant ist. Bei maschinellem Lernen hingegen hängt all dies bei Weitem nicht nur von einer programmierten Struktur ab, sondern ergibt sich erst im Zusammenhang mit dem Training und der Güte der Trainingsdaten.

Die Erfindung geht von dem Grundgedanken aus, Ergebnisse des auf maschinellem Lernen basierenden ersten Segmentierungsverfahrens zu verwenden, um das Auffinden von Codebereichen und/oder das Decodieren an die gegenwärtige Situation anzupassen. Die Anpassung wird hier über Parameter ausgedrückt, was Einstellungen, Konfigurationen und/oder die Auswahl von eingesetzten Verfahren oder Verfahrensschritten beziehungsweise Zusatzalgorithmen einbezieht. Es werden somit durch Auswertung der ersten Kandidaten, die aus dem ersten Segmentierungsverfahren resultieren, (Steuer-)parameter für die Segmentierung und/oder den Decoder abgeleitet und neu gesetzt.

Die Erfindung hat den Vorteil, dass jeweils eine situationsangepasste Parametrierung oder Einstellung der Segmentierung beziehungsweise des Decoders ermöglicht wird. Das erhöht die Leserate direkt durch mehr gelesene Codes und nochmals indirekt durch kürzere Bearbeitungszeiten, so dass unter (Quasi-)Echtzeitanforderungen mehr Decodierzeit für schwerer lesbare Codes verfügbar wird. Dafür ist kein zusätzlicher Hardwareaufwand etwa in Form eines Abstandssensors erforderlich. Damit verbessert sich der Umgang mit variablen Objekthöhen, wechselnden Kontrasten und dergleichen. Gerade in der Logistik wiederholen sich oft chargenweise Objekte mit bestimmten Eigenschaften wie Paketmustern, so dass eine Umstellung große Verbesserungen gleich für eine ganze Reihe kommender Objekte verspricht, die herkömmlich wie die vorangegangene Charge behandelt würden. Die Erfindung erleichtert auch die Handhabung, da zumindest ein Teil der Parameter nicht mehr von Hand gesetzt werden muss und deshalb möglichweise gar nicht erst in einem Konfigurationstool sichtbar gemacht wird, so dass sich dessen Komplexität reduziert.

Das erste Segmentierungsverfahren erzeugt bevorzugt eine erste Ergebniskarte, wobei eine Ergebniskarte ein Bild geringerer Auflösung als das aufgenommene Bild ist, dessen Pixel eine Information aufweisen, ob am Ort des Pixels ein Codebereich erkannt ist. Dies ist eine besonders einfach zu handhabende Repräsentation der ersten Kandidaten als jeweilige Ergebniskarte (Heatmap). Aufgrund der im Vergleich zum Bild geringeren Auflösung steht jedes Pixel der Ergebniskarte für eine gewisse Region oder Kachel des Bildes und gibt binär oder mit einem Scoring-Wert Auskunft, ob dies Teil eines Codebereichs ist oder nicht beziehungsweise wie wahrscheinlich in dieser Kachel ein Code(teil) aufgenommen wurde, womöglich noch mit Klassifikationsinformationen, wie um welchen Codetyp es sich vermutlich handelt.

Im Anschluss an das Auffinden der Codebereiche erfolgt vorzugsweise eine Feinsegmentierung, in der die Codebereiche feiner abgegrenzt werden, insbesondere in der Auflösung des Bildes. Eine Information über die Position eines Codebereichs enthält noch nicht unbedingt die genauen Grenzen des Codes. Beispielsweise im Falle von Ergebniskarten ist der Codebereich nur in deren gröberer Auflösung lokalisiert. Die Feinsegmentierung verbessert die Grenzen der Codebereiche, vorzugsweise pixelgenau in der Auflösung des aufgenommenen Bildes.

Das erste Segmentierungsverfahren weist bevorzugt ein neuronales Netz auf, insbesondere ein tiefes neuronales Netz beziehungsweise ein Faltungsnetz (CNN, Convoluational Neural Network). Das ist ein für die Bildverarbeitung besonders bewährtes Verfahren des maschinellen Lernens. Das erste Segmentierungsverfahren kann damit besonders zuverlässig erste Kandidaten für Codebereiche bestimmen.

Das neuronale Netz wird bevorzugt mittels überwachten Lernens anhand von Beispielbildern trainiert, die insbesondere anhand der Ergebnisse eines Segmentier- und/oder Decodierverfahrens ohne Verfahren des maschinellen Lernens bewertet sind. Das überwachte Lernen (supervised learning) ermöglicht, aus einem Trainingsdatensatz mit Beispielen einer vorgegebenen richtigen Bewertung auf später im Betrieb präsentierte Bilder zu verallgemeinern. Entsprechende Architekturen von neuronalen Netzen und Algorithmen für Training wie Betrieb (Inferenz) sind für sich bekannt, so dass auf gut funktionierende Lösungen zurückgegriffen oder darauf aufgesetzt werden kann. Einige Literaturstellen wurden einleitend genannt. Die Zuweisung der richtigen Bewertung zu einem Beispielbild, also das Annotieren oder Labeling, kann prinzipiell von Hand erfolgen, da das Training vor der Laufzeit stattfindet. Weiterhin kann das erste Segmentierungsverfahren zumindest teilweise mit Beispielbildern trainiert werden, die ein Segmentierungsverfahren mit klassischer Bildverarbeitung bewertet hat. Das reproduziert am Ende keineswegs nur das klassische Segmentierungsverfahren mit anderen Mitteln, da das neuronale Netz durch das Training seine eigene Bewertung und Verallgemeinerung findet. Ferner kann mindestens ein klassischer Decoder herangezogen werden, der Beispielbilder auswertet und der Codebereiche retrospektiv nur als Positivbeispiel annotiert, wenn dort tatsächlich ein Code gelesen werden könnte.

Das Auffinden von Codebereichen weist bevorzugt ein zweites Segmentierungsverfahren der klassischen Bildverarbeitung ohne maschinelles Lernen auf, mit dem zweite Kandidaten für Codebereiche gefunden werden. Es erfolgt mit anderen Worten eine zusätzliche klassische Segmentierung. Es resultiert vorzugsweise eine zweite Ergebniskarte analog der ersten Ergebniskarte, also ein Bild geringerer Auflösung als das ursprüngliche aufgenommene Bild, dessen Pixel eine Information aufweisen, ob am Ort des Pixels ein Codebereich erkannt ist. Das zweite Segmentierungsverfahren bestimmt bevorzugt zweite Kandidaten in einem in Kacheln unterteilten Bild. Dadurch müssen jeweils nur kleine Bildausschnitte bearbeitet werden, um beispielsweise einen Kontrast zu bestimmen oder Helligkeitskanten zu zählen. Die Kacheln können iterativ nacheinander, aber auch in beliebiger Abstufung parallel abgearbeitet werden. Die zweite Ergebniskarte enthält vorzugsweise ein Pixel je Kachel. Falls erste und zweite Ergebniskarten miteinander verarbeitet werden, haben sie vorteilhafterweise eine gleiche Auflösung, oder es kann eine Auflösungsanpassung erfolgen.

Aus der Auswertung der ersten Kandidaten wird vorzugsweise eine Kontrastschwelle für das zweite Segmentierungsverfahren bestimmt. Das zweite Segmentierungsverfahren, das ja mit klassischer Bildverarbeitung arbeitet, nutzt in diesem Fall ein Kontrastkriterium, um zweite Kandidaten zu finden. Die zugrundeliegende Heuristik ist, dass die hellen und dunklen Bereiche eines optischen Codes einen höheren Kontrast erzeugen als bloße Hintergrundstrukturen. Die Wahl der Kontrastschwelle hat somit einen großen Einfluss auf übersehene optische Codes oder umgekehrt auf fälschlich als optischen Codes angesehene Hintergrundstrukturen. Die ersten Kandidaten, die ja aus Sicht des ersten Segmentierungsverfahrens genau die Bildbereiche mit optischen Codes sind, ermöglichen eine besonders trennscharfe Wahl der Kontrastschwelle.

Die Kontrastschwelle wird vorzugsweise lokal bestimmt, insbesondere je Umgebung eines ersten Kandidaten. Durch eine lokale Kontrastschwelle kann eine noch genauere Anpassung erreicht werden. Die ersten Kandidaten geben Hinweise nicht nur für Kontrastwerte im Bild insgesamt, sondern noch konkreter für ihre unmittelbare Umgebung. Auf diese Weise können unter Umständen kontrastschwache optische Codes in einem Teil des Bildes erkannt werden, ohne zugleich Hintergrundstrukturen in einem anderen Teil des Bildes fälschlich als optische Codes zu erkennen. Alternativ kann eine globale Kontrastschwelle verwendet werden, die also für das ganze Bild gleich gesetzt ist.

Aus der Auswertung der ersten Kandidaten wird vorzugsweise ein Segmentierungsmodus bestimmt. Ein Segmentierungsmodus legt fest, nach welchen Kriterien Bildbereiche als Codebereiche angesehen werden, insbesondere welchen Einfluss die ersten Kandidaten und zweiten Kandidaten auf die Festlegung von Codebereichen haben. Besonders bevorzugt sind dabei folgende Segmentierungsmodi möglich:
1) Verwende die ersten Kandidaten als Codebereiche. In diesem Fall wird das Ergebnis des ersten Segmentierungsverfahrens als Ergebnis der Segmentierung insgesamt übernommen, das zweite Segmentierungsverfahren wird dann vorzugsweise gar nicht ausgeführt.
2) Verwende die zweiten Kandidaten als Codebereiche. Das erste Segmentierungsverfahren dient in diesem Fall nur dazu, die erfindungsgemäße Parametrierung zu ermöglichen, die ersten Kandidaten selbst werden nicht als Codebereiche genutzt.
3) Verwende nur solche Codebereiche, die sowohl erste Kandidaten als auch zweite Kandidaten sind. Das ist ein besonders strenges Kriterium, bei dem sich beide Segmentierungsverfahren im Sinne eines logischen UND oder einer Schnittmenge einig sein müssen. Dadurch gibt es besonders wenig False-Positive-Regionen, um den Preis, dass womöglich optische Codes übersehen werden. Das Verhältnis dieser beiden Fehler kann besonders günstig eingestellt werden, indem dieser dritte oder der nun folgende vierte Segmentierungsmodus situationsbezogen ausgewählt wird.
4) Verwende Codebereiche, die erste Kandidaten oder zweite Kandidaten sind. Hier werden im Sinne eines logischen ODER oder einer Vereinigungsmenge aller potentiell erkannten Codebereiche beider Segmentierungsverfahren berücksichtigt. Dadurch werden optische Codes so gut wie nicht mehr übersehen, es müssen dafür aber auch besonders viele Codebereiche von dem Decoder ausgewertet werden, so dass dessen verfügbare Rechenzeit nur ausreichen wird, wenn durch geschickte Auswahl des Segmentierungsmodus trotz der ODER-Verknüpfung nur wenige False-Positive-Kandidaten verblieben sind.

Als Kriterium zur Bestimmung des Segmentierungsmodus wird vorzugsweise ein Verhältnis der Anzahl erster Kandidaten zu der Anzahl zweiter Kandidaten herangezogen. Dieses Verhältnis gibt letztlich Auskunft darüber, wie einig sich die beiden Segmentierungsverfahren sind. Gibt es beispielsweise sehr viel mehr zweite Kandidaten als erste Kandidaten, so kann das ein Hinweis auf ein Muster des Untergrunds sein. Die zweiten Kandidaten sind dann mutmaßlich zu einem hohen Anteil False-Positives, die lediglich auf den Kontrast des Musters und keinen optischen Code angesprungen sind, so dass ein Segmentierungsmodus gewählt werden kann, der sich allein oder verstärkt auf die ersten Kandidaten verlässt.

Aus der Auswertung der ersten Kandidaten wird bevorzugt ein Filter bestimmt, das zunächst aufgefundene Codebereiche vor dem Decodieren noch ausschließt. Dieses Filter ist folglich ein False-Positive-Filter, das erste Kandidaten noch einem weiteren Test unterzieht, damit nicht wertvolle Decoderzeit für Codebereiche aufgewandt werden muss, die tatsächlich keinen Code enthalten. Je nach Auswertung der ersten Kandidaten kann sich ergeben, dass mindestens ein False-Positiv-Filter Verwendung findet oder nicht.

Das Filter prüft bevorzugt, ob der Codebereich einen hellen Untergrund und/oder Ruhezonen eines optischen Codes aufweist. Das sind zwei Beispiele für ein False-Positive-Filter. Optische Codes befinden sich regelmäßig auf einem Label oder Etikett, demnach in einer homogenen, hellen Umgebung, dies wird im ersten genannten Fall geprüft. Nach dem zweiten Fall wird nach Ruhezonen gesucht, die ein optischer Code aufweisen müsste.

Als Kriterium zur Bestimmung des Filters wird bevorzugt ein Verhältnis der Anzahl erster Kandidaten zu der Anzahl zweiter Kandidaten herangezogen. Das Kriterium ist analog dem oben beispielhaft genannten Kriterium für die Bestimmung des Segmentiermodus.

Der erfindungsgemäße optoelektronische Codeleser weist ein Lichtempfangselement zur Erzeugung von Bilddaten aus Empfangslicht und somit zur Aufnahme eines Bildes auf. Der Lichtempfänger kann derjenige eines Barcodescanners sein, beispielsweise eine Photodiode, und die Intensitätsprofile der Scans werden zeilenweise zu dem Bild zusammengesetzt. Vorzugsweise handelt es sich um einen Bildsensor eines kamerabasierten Codelesers. Der Bildsensor wiederum kann ein Zeilensensor zur Erfassung einer Codezeile oder eines flächigen Codebildes durch Zusammensetzen von Bildzeilen oder ein Matrixsensor sein, wobei auch Aufnahmen eines Matrixsensors zu einem größeren Bild zusammengefügt sein können. Ein Verbund mehrerer Codeleser oder Kameraköpfe ist ebenfalls denkbar. In einer Steuer- und Auswertungseinheit, die selbst Teil eines Barcodescanners oder eines kamerabasierten Codelesers oder als Steuerungsgerät daran angeschlossen sein kann, ist ein erfindungsgemäßes Verfahren zum Lesen optischer Codes gemäß einer der Ausführungsformen implementiert.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Übersichtsdarstellung der beispielhaften Montage eines Codelesers über einem Förderband, auf dem Objekte mit zu lesenden Codes gefördert werden;
- Fig. 2: ein beispielhaftes Ablaufdiagramm für ein Segmentierungsverfahren mit einem neuronalen Netz;
- Fig. 3: ein Beispielbild mit optischen Codes, die mit abnehmender Qualität gedruckt sind;
- Fig. 4a: das Ergebnis eines auf das Bild gemäß Figur 3 angewandten Segmentierungsverfahrens mit neuronalem Netz für 2D-Codes;
- Fig. 4b: das Ergebnis eines auf das Bild gemäß Figur 3 angewandten Segmentierungsverfahrens mit neuronalem Netz für 1D-Codes;
- Fig. 5: ein beispielhaftes Ablaufdiagramm für eine Parametrierung der Segmentierung und/oder der Decodierung anhand einer Auswertung des Ergebnisses eines Segmentierungsverfahrens mit neuronalem Netz;
- Fig. 6: eine nochmalige Darstellung des Beispielbildes gemäß Figur 3 mit einer Ausschnittvergrößerung eines kontrastschwachen Codes;
- Fig. 7: ein beispielhaftes Ablaufdiagramm für ein klassisches Segmentierungsverfahren;
- Fig. 8: ein Beispielbild eines codetragenden Objekts mit musterartiger Textur sowie eine Ausschnittvergrößerung der Textur;
- Fig. 9: das Ergebnis eines auf das Bild gemäß Figur 8 angewandten Segmentierungsverfahrens mit neuronalem Netz;
- Fig. 10a: ein weiteres beispielhaftes Bild mit optischen Codes und Störstrukturen, hier vor allem Text;
- Fig. 10b: das Ergebnis eines auf das Bild gemäß Figur 10a angewandten Segmentierungsverfahrens mit neuronalem Netz; und
- Fig. 10c: das Ergebnis eines auf das Bild gemäß Figur 10a angewandten klassischen Segmentierungsverfahrens.

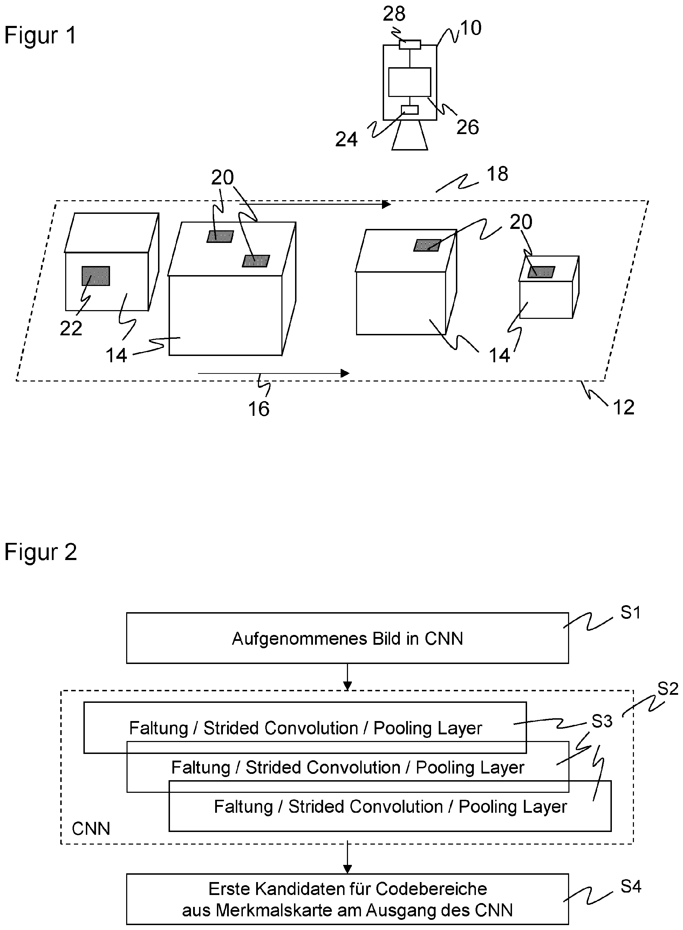

Figur 1 zeigt einen optoelektronischen Codeleser 10 in einer bevorzugten Anwendungssituation montiert über einem Förderband 12, welches Objekte 14, wie durch den Pfeil 16 angedeutet, durch den Erfassungsbereich 18 des Codelesers 10 fördert. Die Objekte 14 tragen an ihren Außenflächen Codes 20, die von dem Codeleser 10 erfasst und ausgewertet werden. Diese Codes 20 können von dem Codeleser 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten Codes 22 eine Mehrzahl von Codelesern 10 aus verschiedenen Richtungen montiert sein, um eine sogenannte Omnilesung aus allen Richtungen zu ermöglichen. Die Anordnung der mehreren Codeleser 10 zu einem Lesesystem erfolgt in der Praxis meist als Lesetunnel. Diese stationäre Anwendung des Codelesers 10 an einem Förderband ist in der Praxis sehr häufig. Die Erfindung bezieht sich aber zunächst auf den Codeleser 10 selbst beziehungsweise das darin implementierte Verfahren zum Decodieren von Codes, so dass dieses Beispiel nicht einschränkend verstanden werden darf.

Der Codeleser 10 erfasst mit einem Bildsensor 24 Bilddaten der geförderten Objekte 14 und der Codes 20, die von einer Steuer- und Auswertungseinheit 26 mittels Bildauswertung und Decodierverfahren weiterverarbeitet werden. Es kommt für die Erfindung nicht auf das konkrete Bildgebungsverfahren an, so dass der Codeleser 10 nach irgendeinem an sich bekannten Prinzip aufgebaut sein kann. Beispielsweise wird jeweils nur eine Zeile erfasst, sei es mittels zeilenförmigem Bildsensor oder einem Scanverfahren, wobei im letztgenannten Fall als Bildsensor 24 ein einfacher Lichtempfänger wie eine Photodiode ausreicht. Die Steuer- und Auswertungseinheit 26 fügt die im Laufe der Förderbewegung erfassten Zeilen zu den Bilddaten zusammen. Mit einem matrixförmigen Bildsensor lässt sich schon in einer Aufnahme ein größerer Bereich erfassen, wobei auch hier das Zusammenfügen von Aufnahmen sowohl in Förderrichtung als auch quer dazu möglich ist. Die mehreren Aufnahmen werden nacheinander und/oder von mehreren Codelesern 10 aufgenommen, die beispielsweise mit ihren Erfassungsbereichen 18 nur gemeinsam die gesamte Breite des Förderbands 12 abdecken, wobei jeder Codeleser 10 nur einen Teilabschnitt des Gesamtbildes aufnimmt und die Teilabschnitte durch Bildverarbeitung (Stitching) zusammengefügt werden. Auch ein nur fragmenthaftes Decodieren innerhalb einzelner Teilabschnitte mit anschließendem Zusammenfügen der Codefragmente ist denkbar.

Aufgabe des Codelesers 10 ist, die Codes 20 zu erkennen und die dort angebrachten Codes auszulesen. Das Erkennen der Codes 20 beziehungsweise der ihnen entsprechenden Codebereiche in einem aufgenommenen Bild wird auch als Segmentierung oder Vorsegmentierung bezeichnet. Über eine Schnittstelle 28 gibt der Codeleser 10 Informationen aus, wie gelesene Codes oder Bilddaten. Es ist auch denkbar, dass die Steuer- und Auswertungseinheit 26 nicht in dem eigentlichen Codeleser 10, also der in Figur 1 gezeigten Kamera angeordnet ist, sondern als eigenes Steuerungsgerät an einen oder mehrere Codeleser 10 angeschlossen wird. Dann dient die Schnittstelle 28 auch als Verbindung zwischen interner und externer Steuerung und Auswertung. Die Steuer- und Auswertungsfunktionalität kann praktisch beliebig auf interne und externe Bausteine verteilt werden, wobei die externen Bausteine auch über Netzwerk oder Cloud angeschlossen sein können. Das alles wird hier nicht weiter unterschieden und die Steuer- und Auswertungseinheit 26 unabhängig von der konkreten Implementierung als Teil des Codelesers 10 aufgefasst. Die Steuer- und Auswertungseinheit 26 kann mehrere Bausteine aufweisen, wie ein FPGA (Field Programmable Gat Array), einen Mikroprozessor (CPU) und dergleichen. Insbesondere für die noch zu beschreibende Segmentierung mit einem neuronalen Netz können spezialisierte Hardwarebausteine eingesetzt sein, etwa ein Kl-Prozessor, eine NPU (Neural Processing Unit), eine GPU (Graphics Processing Unit) oder dergleichen. Die Verarbeitung der Bilddaten, insbesondere die Segmentierung, kann on-the-fly noch während des Einlesens der Bilddaten oder während des Streamings erfolgen, insbesondere auf einem FPGA und in der Art, wie dies für ein neuronales Netz eines Codelesers in der einleitend genannten EP 3 916 633 A1 beschrieben ist.

Figur 2 zeigt ein beispielhaftes Ablaufdiagramm für ein Segmentierungsverfahren mit einem neuronalen Netz. Besonders geeignet dafür ist ein neuronales Netz, insbesondere ein tiefes neuronales Netz beziehungsweise ein Faltungsnetz (Convolutional Neural Network, CNN). In einem Schritt S1 wird das aufgenommene Bild der Eingangsschicht des neuronalen Netzes zugeführt.

In einem Schritt S2 erzeugt das neuronale Netz in mehreren Schichten S3 aus den Eingängen erste Kandidaten für Codebereiche (Inferenz). Es sind rein beispielhaft drei Schichten S3 dargestellt, die Architektur des neuronalen Netzes soll nicht beschränkt sein, und es sind die üblichen Werkzeuge wie Vorwärts- und Rückwärtsverknüpfung (Feedforward, Feedback oder Recurrent), das Auslassen von Schichten (ResNets) und dergleichen möglich. Charakteristisch für ein Faltungsnetz sind die Faltungsschichten, die das Bild beziehungsweise in tieferen Schichten die Merkmalskarte der vorangehenden Schicht effektiv mit einem lokalen Filter falten. Dabei sind Auflösungsverluste (Downsampling) durch größere Verschiebungsschritte des Filters möglich (Strided Convolution, Pooling Layer). Die Reduktion der Auflösung insbesondere in frühen Schichten ist erwünscht, um die Inferenz überhaupt schnell genug und mit begrenzten Ressourcen leisten zu können. Entgegen der Darstellung kann das neuronale Netz auch Schichten ohne Faltung oder Pooling umfassen.

Das neuronale Netz wird vorab anhand von Beispielbildern mit bekannten Codebereichen trainiert (Supervised Learning, überwachtes Lernen). Solche Beispielbilder können von Hand bewertet werden (Labelling, Annotating). Andererseits ist möglich, mit einem klassischen Decoder samt klassischer Segmentierung Beispielbilder auszuwerten und Codebereiche retrospektiv anhand tatsächlich lesbarer Codes zu erkennen. Gerade ohne Zeitdruck im Offline-Modus sind solche klassischen Mittel sehr mächtig, so dass eine Vielzahl von Trainingsbeispielen automatisch generiert werden kann.

In einem Schritt S4 hat das neuronale Netz seine Inferenz abgeschlossen, und die Merkmalskarte an seinem Ausgang liefert die gesuchten ersten Kandidaten für Codebereiche. Die ersten Kandidaten werden vorzugsweise in Form einer Ergebniskarte (Heatmap) bestimmt. Das ist ein Bild einer Auflösung, das beispielsweise der letzten Merkmalskarte am Ausgang des neuronalen Netzes entspricht und dessen Pixel somit einen gewissen Bereich des höher aufgelösten Bildes repräsentieren. Im Falle einer binären Ergebniskarte zeigt ein Pixel an, ob in dem repräsentierten Bildabschnitt des Bildes ein Codebereich liegt oder nicht. Alternativ können numerische Werte der Pixel eine Bewertung der Wahrscheinlichkeit für einen Code (Scoring-Wert) und/oder einen bestimmten Codetyp anzeigen.

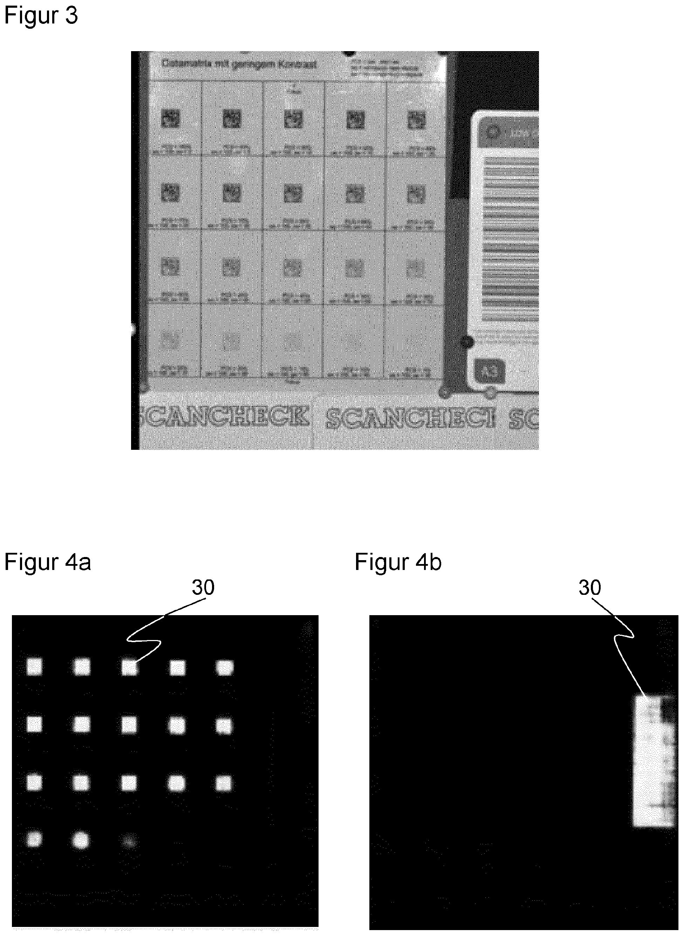

Figur 3 zeigt ein Beispielbild mit optischen Codes, die mit abnehmender Qualität gedruckt sind. Die Figuren 4a-b zeigen das Ergebnis eines auf das Bild gemäß Figur 3 angewandten Segmentierungsverfahrens mit neuronalem Netz, nämlich eine Heatmap mit ersten Kandidaten für Codebereiche 30 mit 2D-Codes in Figur 4a beziehungsweise mit 1D-Codes in Figur 4b.

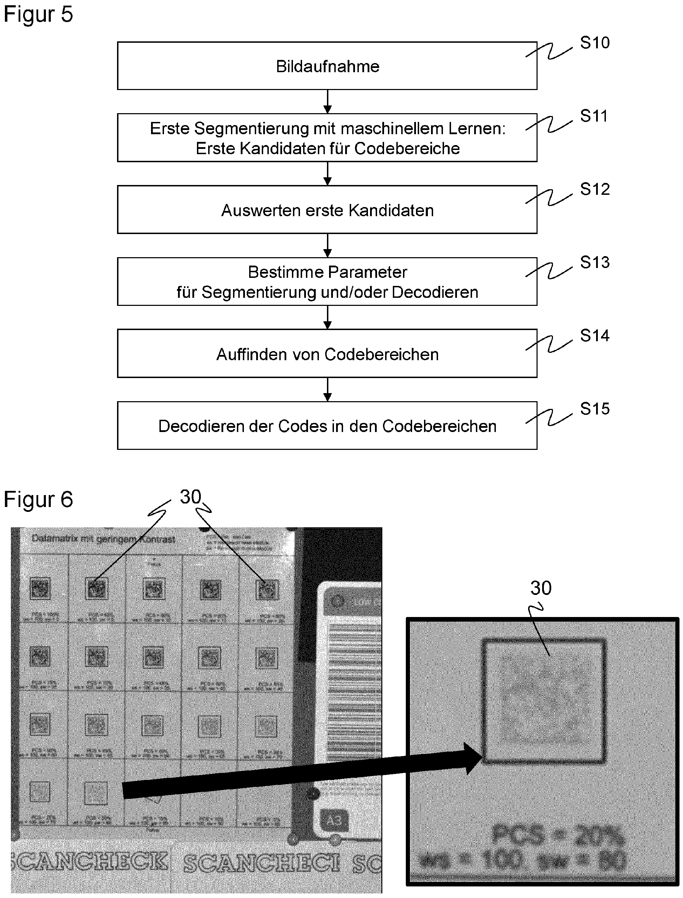

Figur 5 zeigt ein beispielhaftes Ablaufdiagramm für eine Parametrierung der Segmentierung und/oder der Decodierung anhand einer Auswertung der ersten Kandidaten. Die Idee hierbei ist, aus den ersten Kandidaten gewonnene Informationen zu nutzen, um weitere Schritte des Codelesens situationsbezogen zu parametrieren. Das kann eine beispielsweise eine weitere Segmentierung mit klassischen Mitteln sein, wie weiter unten noch beschrieben. Hier gibt es herkömmlich ein Henne-Ei-Problem da Eigenschaften aus den Codebereichen benötigt werden, um Codebereiche aufzufinden. Dies wird dadurch aufgelöst, dass das erste Segmentierungsverfahren auf Basis eines neuronalen Netzes parameterfrei ist und eben keine Vorabinformation über die Codebereiche der aktuellen Situation benötigt. Zudem kann das erste Segmentierungsverfahren ganz früh in der Verarbeitungskette liegen, also beispielsweise schon im Zuge einer Vorverarbeitung des gerade aufgenommenen Bildes auf einem FPGA. Eine Parametrierung ist alternativ oder zusätzlich für die sich anschließende Decodierung möglich.

Soweit noch in Überlappung mit dem Ablaufdiagramm der Figur 2 erfolgt in einem Schritt S10 die Bildaufnahme, und auf das aufgenommene Bild wird in einem Schritt S11 das erste Segmentierungsverfahren mit neuronalem Netz angewandt, um die ersten Kandidaten zu gewinnen.

In einem Schritt S12 werden die ersten Kandidaten ausgewertet, um Kenngrößen zu bestimmen. Diese werden in einem Schritt S13 genutzt, um Parameter zum situationsbezogenen Anpassen der nachfolgenden Schritte zu bestimmen, nämlich dem Auffinden von Codebereichen in einem Schritt S14 und/oder dem Decodieren der Codebereiche in einem Schritt S15.

Es gibt hier eine Vielzahl von Steuerparametern für das Auffinden von Codebereichen S14 und das Decodieren S15, die gesetzt oder angepasst werden könnten. Nachfolgend werden exemplarisch ein Suchkontrast für eine klassische Segmentierung, eine Aktivierung von False-Positiv-Filtern und eine Auswahl eines Segmentiermodus erläutert. Die Erfindung bezieht sich ebenso auf die Anpassung weiterer Steuerparameter, etwa die Erkennung von Unschärfe-Situationen, in denen das aufgenommene Bild insgesamt zurückgestellt wird, bis womöglich in der Zukunft in einer Pause Verarbeitungszeit des Decoders verfügbar wird, oder von Sondersituationen, in denen ein Bild insgesamt nicht bearbeitet zu werden braucht oder voraussichtlich nicht sinnvoll bearbeitet werden kann.

Der erste genauer betrachtete Parameter ist der Suchkontrast für eine klassische Segmentierung. Das ist nach dem ersten Segmentierungsverfahren mit neuronalem Netz ein zweites Segmentierungsverfahren, das zweite Kandidaten für Codebereiche liefert. Im Zusammenhang mit dem dritten betrachteten Parameter wird weiter unten noch diskutiert, wie die ersten Kandidaten und zweiten Kandidaten in unterschiedlichen Ausführungsformen verwendet werden können, um die Codebereiche festzulegen.

Der Suchkontrast bezeichnet eine geforderte mindeste Grauwertveränderung über eine gewisse Anzahl von Pixeln hinweg, also eine Kontrastschwelle, wodurch sich texturlose oder nur schwach variierende Bildbereiche von den Hell-Dunkel-Strukturen eines optischen Codes 20 unterscheiden lassen. Herkömmlich würde ein fester Suchkontrast vorgegeben oder einmalig für eine Anwendung von Hand parametriert. Durch Auswertung des Kontrastes der ersten Kandidaten lässt sich ein situationsbezogener Suchkontrast ermitteln. Beispielsweise wird die Varianz beziehungsweise Standardabweichung der Grauwerte im Bildbereich der ersten Kandidaten bestimmt und ein gewisses Vielfaches davon als Suchkontrast festgelegt. Der angepasste Suchkontrast kann global, also über alle Kandidaten, aber auch lokal jeweils für eine Umgebung eines ersten Kandidaten gesetzt werden.

Figur 6 zeigt eine nochmalige Darstellung des Beispielbildes gemäß Figur 3. Hier nimmt der Kontrast zur Veranschaulichung ständig ab, eine Ausschnittvergrößerung zeigt einen besonders kontrastschwachen Code. Entsprechend Figur 4a sind die Codebereiche 30 nach dem ersten Segmentierungsverfahren bekannt, so dass die Kontraste je Codebereich ermittelt werden können. Die Figur 6 darf aber auch als Illustration für eine langsamere Veränderung verstanden werden, wo anfangs kontraststarke Codes zu lesen waren wie im oberen Teil und später kontrastschwache Codes wie im unteren Teil auftreten.

Um einen Leserateneinbruch bei herkömmlich festem Suchkontrast zu vermeiden, wird der Suchkontrast anhand der ersten Kandidaten jeweils nachgezogen.

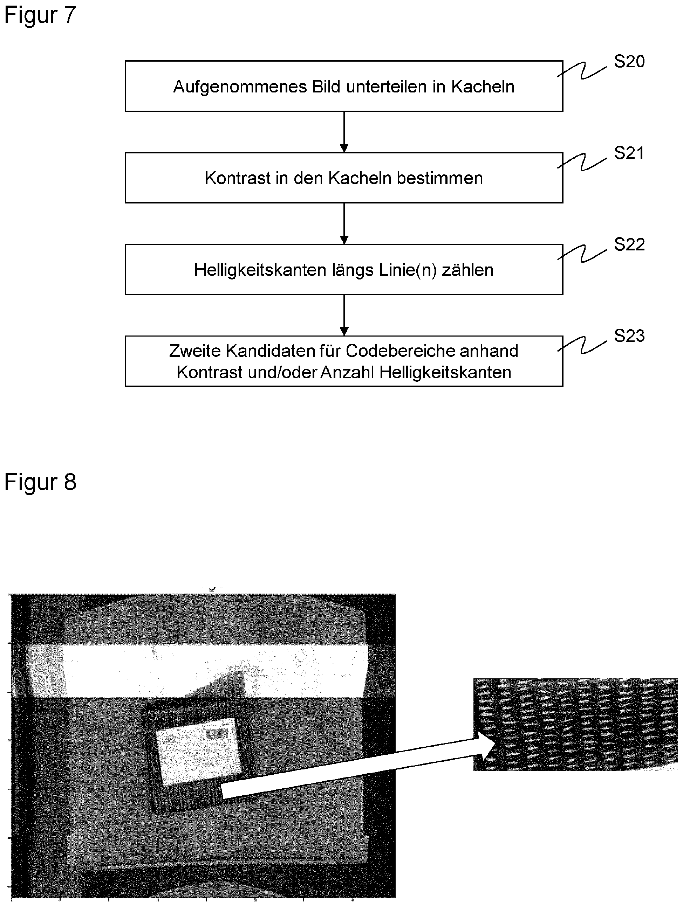

Figur 7 zeigt noch ergänzend ein beispielhaftes Ablaufdiagramm für ein klassisches Segmentierungsverfahren. Die klassische Segmentierung basiert im Allgemeinen auf vergleichsweise einfachen Rechenregeln, die auch von einem FPGA durchgeführt werden können. Die hier dargestellte klassische Segmentierung ist rein beispielhaft zu verstehen, insbesondere hinsichtlich der zwar vorteilhaften, aber nicht zwingenden Verwendung von Kacheln, und es können jegliche Bildverarbeitungsverfahren eingesetzt werden, die an sich für die Segmentierung bekannt sind, wobei für das klassische Segmentierungsverfahren die Einschränkung besteht, dass kein Verfahren des maschinellen Lernens und damit insbesondere kein neuronales Netz Verwendung findet.

In einem Schritt S20 wird das Bild in Kacheln unterteilt, d.h. in Bildabschnitte von beispielsweise 10x10 oder eine andere Anzahl von Pixeln, die sich auch in X- und Y-Richtung unterscheiden kann. Die weitere Verarbeitung kann dann kachelweise erfolgen, wobei eine Parallelisierung über mehrere Kacheln möglich ist.

In einem Schritt S21 wird je Kachel der Kontrast bestimmt, denn ein homogener Bereich mit wenig Kontrast enthält keinen Code. Zur Kontrastbestimmung können bereits on-the-fly beispielsweise auf einem FPGA die Grauwerte der eingelesenen Pixel und deren Quadrate aufsummiert werden, denn aus diesen Summenwerten ist dann ohne erneuten Pixelzugriff die Bestimmung von Mittelwert und Standardabweichung möglich, wobei letzteres ein Kontrastmaß ist. Solche Summenwerte können übrigens auch bei der oben beschriebenen Auswertung des Kontrasts der ersten Kandidaten herangezogen werden, um die Berechnungen zu beschleunigen.

In einem Schritt S22 werden längs einer Linie, vorzugsweise auf einem Testkreuz zweier Linien senkrecht zueinander, Übergänge von Hell nach Dunkel oder umgekehrt gezählt. Das sind potentielle Kanten zwischen Codeelementen, von denen in einem Codebereich eine Mindestanzahl erwartet wird. Der Schritt S22 ist ein Beispiel für eine optionale weitere Bewertung im Rahmen der klassischen Segmentierung über die reine Kontrastbewertung hinaus.

In einem Schritt S23 erfolgt eine Kontrastbewertung gegen den angepassten Suchkontrast. Kacheln mit zu geringem Kontrast werden verworfen, sie sind keine ersten Kandidaten für Codebereiche. In Kacheln mit ausreichend Kontrast wird optional zusätzlich die Anzahl Helligkeitskanten gegen eine Kantenschwelle verglichen, und Kacheln mit einer zu geringen Anzahl werden ebenfalls verworfen. Auf diese Weise verbessert die Auswertung der ersten Kandidaten das zweite, klassische Segmentierungsverfahren durch Einstellen eines situationsangepassten Suchkontrasts.

Der zweite genauer betrachtete Parameter betrifft das situationsbezogene Zuschalten mindestens eines False-Positive-Filters. Figur 8 zeigt ein Beispielbild eines codetragenden Objekts mit musterartiger Textur sowie eine Ausschnittvergrößerung der Textur. Solche Texturen oder Muster können ein Kontrastkriterium erfüllen, auch bei angepasstem Suchkontrast, und dadurch wird mitunter eine Vielzahl von Codebereichen erkannt, die tatsächlich nur das Muster enthalten und somit False-Positives sind. Diese lassen sich wenigstens teilweise durch False-Positive-Filter eliminieren, etwa die Prüfung auf einen hellen Untergrund entsprechend einem Codelabel oder -etikett oder auf Vorhandensein von Ruhezonen eines optischen Codes 20. Allerdings kosten False-Positive-Filter zum einen wertvolle Auswertungszeit, und zum anderen sind sie teilweise zu großzügig und verwerfen optische Codes statt False-Positives, etwa wenn ein optischer Code direkt an einen Labelrand gedruckt ist und deshalb keine Ruhezone umfasst.

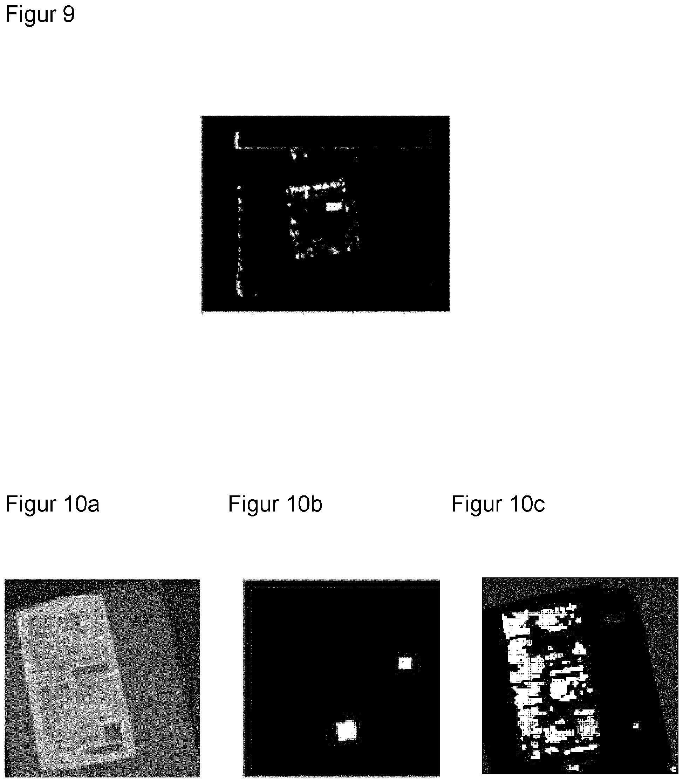

Bei einer musterartigen Textur wie in Figur 8 wird das zweite, klassische Segmentierungsverfahren eine Vielzahl von zweiten Kandidaten erzeugen. Im Gegensatz dazu ist das erste Segmentierungsverfahren mit neuronalem Netz recht immun gegen eine solche Textur. Figur 9 zeigt eine Heatmap mit ersten Kandidaten für das Bild der Figur 8. Das erste Segmentierungsverfahren hat die Codebereiche mit tatsächlichen optischen Codes nicht ganz trennscharf erfasst, aber jedenfalls bei Weitem nicht jeden Bereich mit einer Musterstruktur als Code angesehen. Es gibt also viel weniger erste Kandidaten als zweite Kandidaten. Ein einfaches Kriterium, um ein Bild mit störender musterartiger Textur zu erkennen, bewertet daher das Verhältnis der Anzahl erster Kandidaten und zweiter Kandidaten, und wenn dies beispielsweise unter 1/2 oder einem anderen vorgegebenen Grenzwert liegt, wird eine Situation mit musterartiger Textur angenommen, und es werden False-Positive-Filter zugeschaltet.

Der dritte genauer betrachtete Parameter betrifft die Wahl eines Segmentierungsmodus. Dabei können die folgenden Segmentierungsmodi oder eine Teilauswahl davon zur Verfügung stehen:
1) Das erste Segmentierungsverfahren, d.h. die ersten Kandidaten werden direkt als Codebereiche angesehen.
2) Das zweite Segmentierungsverfahren, d.h. die zweiten Kandidaten werden direkt als Codebereiche angesehen, die ersten Kandidaten tragen nur mittelbar bei, indem anhand der ersten Kandidaten Parameter insbesondere für das zweite Segmentierungsverfahren gesetzt werden.
3) Erster Kombinationsmodus: Codebereiche sind nur dort, wo erste Kandidaten UND zweite Kandidaten erkannt sind. Durch Beschränkung auf die Schnittmenge werden nur die aussichtsreichsten Codebereiche dem Decoder zugeführt. Die Balance liegt hier auf der Vermeidung von False-Positives um den Preis möglicher False-Negatives, also übersehener optischer Codes.
4) Zweiter Kombinationsmodus: Codebereiche sind dort, wo erste Kandidaten ODER zweite Kandidaten erkannt sind. Die Vereinigungsmenge führt alle Kandidaten dem Decoder zu. Die Balance liegt hier auf der Vermeidung von False-Negatives um den Preis, dass Rechenzeit auf Codebereiche verwendet wird, in denen sich gar kein optischer Code befindet.

Die Segmentierungsmodi unterscheiden sich somit in der Wahrscheinlichkeit, dass ein Codebereich tatsächlich einen Code enthält, und in der benötigten Rechenzeit für den Decoder. Wie schon diskutiert, werden False-Positives in der Praxis gehäuft von Hintergrundtexturen verursacht. Daher kann ein ähnliches Kriterium herangezogen werden wie im Falle von False-Positive-Filtern, das die Anzahl erster Kandidaten und die Anzahl zweiter Kandidaten vergleicht. Je mehr zweite Kandidaten es gegenüber ersten Kandidaten gibt, umso mehr False-Positives können unterstellt werden. Gibt es also vergleichsweise viele zweite Kandidaten, so wird eher der Segmentierungsmodus 1) verwendet, weil die klassische Segmentierung nicht verlässlich ist, oder der Segmentierungsmodus 3), der nur besonders aussichtsreiche Codebereiche berücksichtigt. Umgekehrt sind bei einem Verhältnis nahe eins eher alle Kandidaten im Segmentierungsmodus 4) von Interesse, der die höchste Leserate verspricht, aber auch die meiste Rechenzeit fordert und von vielen False-Positives überladen würde, oder man verlässt sich in diesem Fall auf die schon lange genutzte klassische Segmentierung im Segmentierungsmodus 2), weil abgesichert ist, dass damit keine übermäßige Anzahl False-Positives gefunden wurde.

Die Figuren 10a-c illustrieren nochmals das Verhältnis von ersten Kandidaten zu zweiten Kandidaten. Dabei zeigt Figur 10a ein weiteres beispielhaftes Bild mit optischen Codes und Störstrukturen, hier vor allem Text. Man erkennt im Hintergrund ein Paket mit einem weißen Etikett im Vordergrund, das zahlreiche Beschriftungen einschließlich mehrerer optischer Codes aufweist. Figur 10b zeigt das Ergebnis des auf das Bild gemäß Figur 10a angewandten ersten Segmentierungsverfahrens mit neuronalem Netz, also die ersten Kandidaten, und Figur 10c das Ergebnis des zweiten, klassischen Segmentierungsverfahrens, also die zweiten Kandidaten. Das Missverhältnis ist offensichtlich und damit klar erkennbar, dass es Störstrukturen gab. Hier könnte beispielsweise der erste Segmentierungsmodus gewählt werden, zumal das erste Segmentierungsverfahren sogar einen Codebereich erkannt hat, den das zweite Segmentierungsverfahren wegen der dunkleren Bildbereiche und des dadurch gedämpften Kontrastes übersehen hat.

Sollte ausnahmsweise das erste Segmentierungsverfahren gar keine ersten Kandidaten liefern, so kann per Default das zweite Segmentierungsverfahren mit fixem Suchkontrast einspringen. Alternativ kann ein solches Bild auch zumindest vorerst von der Decodierung ausgeschlossen werden, weil eine hohe Wahrscheinlichkeit besteht, dass gar kein optischer Code aufgenommen wurde oder ein doch vorhandener optischer Code aufgrund von geringer Größe, Unschärfe oder dergleichen ohnehin nicht gelesen werden könnte.

## Patentansprüche

1. Verfahren zum Lesen optischer Codes (20), mit den Schritten Aufnehmen eines Bildes,
Auffinden von Codebereichen (30) in dem Bild und
Decodieren der optischen Codes (20) in den Codebereichen (30),
wobei das Auffinden von Codebereichen (30) ein erstes Segmentierungsverfahren mit maschinellem Lernen aufweist, mit dem erste Kandidaten für Codebereiche (30) gefunden werden.
**dadurch gekennzeichnet,**
**dass** die ersten Kandidaten ausgewertet werden, um Parameter für das Auffinden von Codebereichen (30) und/oder das Decodieren der optischen Codes (20) zu bestimmen.

2. Verfahren nach Anspruch 1,
wobei das erste Segmentierungsverfahren eine erste Ergebniskarte erzeugt,
wobei eine Ergebniskarte ein Bild geringerer Auflösung als das aufgenommene Bild ist, dessen Pixel eine Information aufweisen, ob am Ort des Pixels ein Codebereich (30) erkannt ist.

3. Verfahren nach Anspruch 1 oder 2,
wobei das erste Segmentierungsverfahren ein neuronales Netz aufweist, insbesondere ein tiefes Faltungsnetz.

4. Verfahren nach einem der vorhergehenden Ansprüche,
wobei das Auffinden von Codebereichen (30) ein zweites Segmentierungsverfahren der klassischen Bildverarbeitung ohne maschinelles Lernen aufweist, mit dem zweite Kandidaten für Codebereiche (30) gefunden werden.

5. Verfahren nach Anspruch 4,
wobei aus der Auswertung der ersten Kandidaten eine Kontrastschwelle für das zweite Segmentierungsverfahren bestimmt wird.

6. Verfahren nach Anspruch 5,
wobei die Kontrastschwelle lokal bestimmt wird, insbesondere je Umgebung eines ersten Kandidaten.

7. Verfahren nach einem der Ansprüche 4 bis 6,
wobei aus der Auswertung der ersten Kandidaten ein Segmentierungsmodus bestimmt wird, insbesondere einer der folgenden Segmentierungsmodi: verwende die ersten Kandidaten als Codebereiche (30), verwende die zweiten Kandidaten als Codebereiche (30), verwende nur solche Codebereiche (30), die sowohl erste Kandidaten als auch zweite Kandidaten sind, verwende Codebereiche (30), die erste Kandidaten oder zweite Kandidaten sind.

8. Verfahren nach Anspruch 7,
wobei als Kriterium zur Bestimmung des Segmentierungsmodus ein Verhältnis der Anzahl erster Kandidaten zu der Anzahl zweiter Kandidaten herangezogen wird.

9. Verfahren nach einem der vorhergehenden Ansprüche,
wobei aus der Auswertung der ersten Kandidaten ein Filter bestimmt wird, das zunächst aufgefundene Codebereiche (30) vor dem Decodieren noch ausschließt.

10. Verfahren nach Anspruch 9,
wobei das Filter prüft, ob der Codebereich (30) einen hellen Untergrund und/oder Ruhezonen eines optischen Codes (20) aufweist.

11. Verfahren nach einem der Ansprüche 4 bis 8 und Anspruch 9 oder 10,
wobei als Kriterium zur Bestimmung des Filters ein Verhältnis der Anzahl erster Kandidaten zu der Anzahl zweiter Kandidaten herangezogen wird.

12. Optoelektronischer Codeleser (10) mit mindestens einem Lichtempfangselement (24) zur Erzeugung von Bilddaten und mit einer Steuer- und Auswertungseinheit (26), in der ein Verfahren zum Lesen optischer Codes (20) nach einem der vorhergehenden Ansprüche implementiert ist.

## Claims

1. A method of reading optical codes (20), said method comprising the steps
recording an image;
locating code zones (30) in the image; and
decoding the optical codes (20) in the code zones (30),
wherein the locating of code zones (30) has a first segmentation process with machine learning by which first candidates for code zones (30) are found,
**characterized in that**
the first candidates are evaluated to determine parameters for the locating of code zones (30) and/or the decoding of the optical codes (20).

2. A method in accordance with claim 1,
wherein the first segmentation process generates a first result map, with a result map being an image of lower resolution than the recorded image whose pixels comprise information on whether a code zone (30) has been recognized at the location of the pixel.

3. A method in accordance with claim 1 or claim 2,
wherein the first segmentation process has a neural network, in particular a convolution neural network.

4. A method in accordance with any one of the preceding claims,
wherein the locating of code zones (30) comprises a second segmentation process of classical image processing without machine learning by which second candidates for code zones (30) are found.

5. A method in accordance with claim 4,
wherein a contrast threshold for the second segmentation process is determined from the evaluation of the first candidates.

6. A method in accordance with claim 5,
wherein the contrast threshold is locally determined, in particular per environment of a first candidate.

7. A method in accordance with any one of the claims 4 to 6,
wherein a segmentation mode, in particular one of the following segmentation modes, is determined from the evaluation of the first candidates: use the first candidates as code zones (30); use the second candidates as code zones (30); only use those code zones (30) which are both first candidates and second candidates; use code zones (30) which are first candidates or second candidates.

8. A method in accordance with claim 7,
wherein a ratio of the number of first candidates to the number of second candidates is used as the criterion for determining the segmentation mode.

9. A method in accordance with any one of the preceding claims,
wherein a filter that initially excludes located code zones (30) before the decoding is determined from the evaluation of the first candidates.

10. A method in accordance with claim 9,
wherein the filter checks whether the code zone (30) has a light background and/or quiet zones of an optical code (20).

11. A method in accordance with any one of the claims 4 to 8 and claim 9 or claim 10,
wherein a ratio of the number of first candidates to the number of second candidates is used as the criterion for determining the filter.

12. An optoelectronic code reader (10) having at least one light reception element (24) for generating image data and having a control and evaluation unit (26) in which a method of reading optical codes (20) in accordance with any one of the preceding claims is implemented.

## Revendications

1. Procédé de lecture de codes optiques (20), comprenant les étapes consistant à
acquérir une image,
identifier des zones de code (30) dans l'image et
décoder les codes optiques (20) dans les zones de code (30),
dans lequel l'étape d'identification de zones de codes (30) présente un premier procédé de segmentation à apprentissage automatique permettant de trouver les premiers candidats pour les zones de code (30),
**caractérisé en ce que**
les premiers candidats sont évalués pour déterminer des paramètres d'identification de zones de code (30) et/ou de décodage des codes optiques (20).

2. Procédé selon la revendication 1,
dans lequel le premier procédé de segmentation génère une première carte de résultats, une carte de résultats étant une image de résolution inférieure à celle de l'image acquise, dont les pixels comportent une information indiquant si une zone de code (30) est détectée à l'emplacement du pixel.

3. Procédé selon la revendication 1 ou 2,
dans lequel le premier procédé de segmentation présente un réseau de neurones, en particulier un réseau de neurones convolutif profond.

4. Procédé selon l'une des revendications précédentes,
dans lequel l'étape consistant à acquérir des zones de code (30) présente un deuxième procédé de segmentation du traitement d'image classique sans apprentissage automatique permettant de trouver des deuxièmes candidats pour les zones de codes (30).

5. Procédé selon la revendication 4,
dans lequel un seuil de contraste pour le deuxième procédé de segmentation est déterminé à partir de l'évaluation des premiers candidats.

6. Procédé selon la revendication 5,
dans lequel le seuil de contraste est déterminé localement, en particulier pour chaque voisinage d'un premier candidat.

7. Procédé selon l'une des revendications 4 à 6,
dans lequel un mode de segmentation est déterminé à partir de l'évaluation des premiers candidats, en particulier l'un des modes de segmentation suivants : utiliser les premiers candidats comme zones de code (30), utiliser les deuxièmes candidats comme zones de code (30), utiliser uniquement les zones de code (30) qui sont à la fois des premiers candidats et des deuxièmes candidats, utiliser les zones de code (30) qui sont des premiers candidats ou des deuxièmes candidats.

8. Procédé selon la revendication 7,
dans lequel un rapport du nombre de premiers candidats sur le nombre de deuxièmes candidats est utilisé comme critère de détermination du mode de segmentation.

9. Procédé selon l'une des revendications précédentes,
dans lequel un filtre est déterminé à partir de l'évaluation des premiers candidats, qui exclut, avant le décodage, des zones de code (30) initialement identifiées.

10. Procédé selon la revendication 9,
dans lequel le filtre vérifie si la zone de code (30) présente un fond clair et/ou des zones de repos d'un code optique (20).

11. Procédé selon l'une des revendications 4 à 8 et selon la revendication 9 ou 10,
dans lequel un rapport du nombre de premiers candidats sur le nombre de deuxièmes candidats est utilisé comme critère de détermination du filtre.

12. Lecteur de codes optoélectronique (10) comportant au moins un élément récepteur de lumière (24) destiné à générer des données d'image, et une unité de commande et d'évaluation (26) dans laquelle est mis en œuvre un procédé de lecture de codes optiques (20) selon l'une des revendications précédentes.
